# FASCICULE DE BREVET EUROPEEN

(11) **EP 2 653 204 B1**
(45) Date de publication et mention de la délivrance du brevet: **09.12.2026**
(21) Numéro de dépôt: 13305457.7
(22) Date de dépôt: 09.04.2013
(51) Int. Cl.: B01D 3/00

(54) **PLATEAU DISTRIBUTEUR À CLOISONS PERFORÉES POUR COLONNE DE CONTACT GAZ/LIQUIDE EMBARQUÉE**
VERTEILERBODEN MIT PERFORIERTEN TRENNWÄNDEN FÜR OFFSHORE GAS-FLÜSSIGKEITS-KONTAKTSÄULE
DISTRIBUTOR TRAY WITH PERFORATED WALLS FOR OFFSHORE GAS/LIQUID CONTACT COLUMN

(30) Priorité: 18.04.2012 FR 1201144
(43) Date de publication de la demande: 23.10.2013
(73) Titulaire: IFP Energies nouvelles, 92500 Rueil-Malmaison (FR)
(72) Inventeur: Haroun, Yacine, 69520 Grigny (FR); Raynal, Ludovic, 69600 Oullins (FR); Alix, Pascal, 38150 Roussillon (FR)
(74) Mandataire: IFP Energies nouvelles

(56) Documents cités:
- EP-A1- 0 434 510
- FR-A- 928 201
- FR-A1- 2 352 572
- FR-A1- 2 771 018
- FR-A1- 2 771 019
- US-A- 1 811 247
- US-A- 2 926 754
- US-A- 2 944 009
- US-A- 3 524 731
- US-A- 5 752 538
- US-A- 6 149 136

## Description

La présente invention concerne le domaine des colonnes de contact gaz/liquide offshore, et plus particulièrement les unités offshore de traitement de gaz, de captage du CO₂, de déshydratation ou encore de distillation.

Les unités offshores de traitement de gaz et/ou de captage du CO₂ par lavage aux amines comprennent des colonnes d'absorption et de régénération de fluides, liquide ou gazeux. Ces dernières fonctionnent en écoulement gaz/liquide à contre courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, sont installées également des colonnes de distillation ou des colonnes de déshydratation.

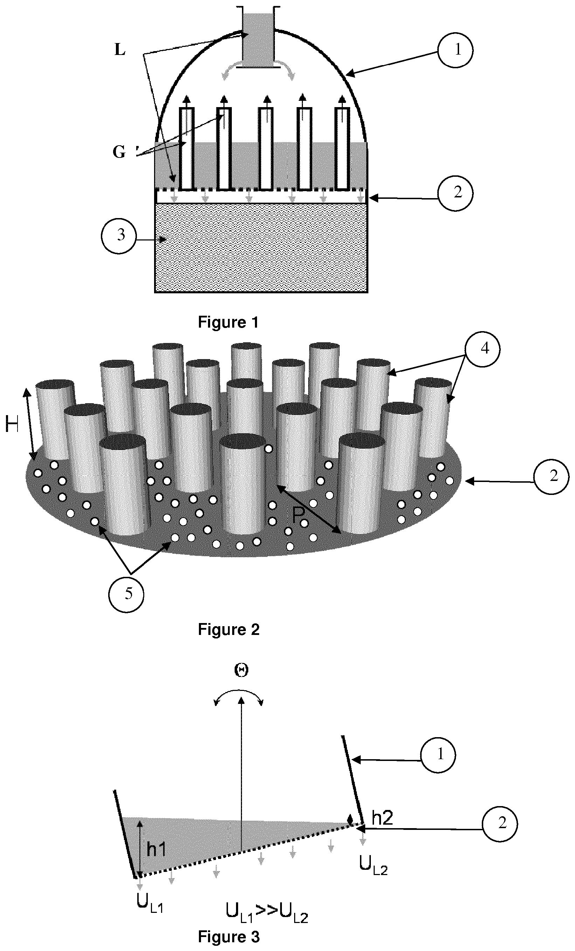

Les colonnes utilisées dans ces unités offshores de traitement de gaz et/ou de capture de CO₂ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une colonne de traitement de gaz (1) équipée d'un plateau distributeur en tête de colonne. Classiquement, cette colonne de traitement de gaz (1) comporte plusieurs sections (3) remplies par un contacteur, un plateau distributeur (2) est disposé au-dessus de chaque section (3). Le contacteur gaz/liquide met en contact le gaz (G) et le liquide (L) afin de permettre les échanges.

Les distributeurs standards (2) utilisés dans les colonnes d'absorption/régénération ou encore de distillation sont généralement constitués d'un plateau collecteur/distributeur équipé de cheminées (4) (cf. figure 2). La distribution du liquide se fait par le passage du liquide dans des orifices (5) positionnés sur le bas du plateau (2) et la distribution du gaz se fait par les cheminées (4). Chaque cheminée (4) permet le passage du gaz, selon le mode de fonctionnement contre-courant ou co-courant, de la partie basse de la colonne vers la partie haute de la colonne (1) ou bien de la partie haute vers la partie basse. Les cheminées (4) sont en saillie d'un côté du plateau (2) et sont perpendiculaires à celui-ci. Chaque cheminée (4) est formée de plusieurs parois, par exemple parallélépipédiques ou cylindriques qui délimitent un volume interne qui est ouvert de part et d'autre du plateau (2). Pour éviter que le liquide ne passe dans les cheminées (4), l'ouverture d'échappement ou d'arrivée du gaz au dessus du plateau (selon le mode de fonctionnement à contre-courant ou à co-courant), est préférentiellement orthogonale à la direction longitudinale de la cheminée (4). L'objectif du plateau distributeur est de distribuer le liquide (L) de manière homogène sur le contacteur gaz/liquide (3).

Les plateaux équipés de cheminées peuvent être de différents types, et positionnées suivant différentes configurations. Différentes variantes de plateaux distributeurs sont exposées notamment dans les demandes de brevet et brevets suivants : US6338774B, US2004020238A, US6149136A et US5752538A.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide subissent des mouvements de houle avec jusqu'à six degrés de liberté ("lacet, tangage, roulis, pilonnement, balancement, poussée").

A titre indicatif, l'angle associé à la combinaison des oscillations de tangage et de roulis est de l'ordre de +/- 5° avec une période allant de 15 à 20 s. Les ordres de grandeur des accélérations longitudinale, transversale et verticale rencontrées dans la colonne varient respectivement entre 0,2/0,7/0,2 m/s² à 6 m au dessus du pont sur lequel est disposée la colonne et 0,3/1,2/0,3 m/s² à 50 m au dessus du pont.

Dans ces conditions, le fonctionnement des plateaux distributeurs classiques équipés de cheminées (figure 2) peut être fortement perturbé. En effet, le fonctionnement de ces distributeurs est principalement gravitaire, une garde de liquide de hauteur homogène "h" doit s'établir sur le plateau distributeur. Le carré de la vitesse de passage du liquide par les orifices (5) situés en bas du plateau (2) est proportionnel à la hauteur de la garde liquide (*U_{L}² ∝ gh*). Lorsque le plateau (2) est incliné sous l'effet de la houle (figure 3), la hauteur de la garde liquide n'est plus uniforme sur le plateau distributeur (*h₁>h₂*) ce qui provoque un déséquilibre dans la distribution du liquide en entrée du contacteur gaz/liquide (3). La qualité de distribution et donc l'efficacité de la colonne sont fortement impactées. Cette mal-distribution, si elle n'est pas maitrisée, peut sensiblement dégrader les performances de la colonne. Il faudrait une garde liquide importante (environ 0,6 m) pour compenser ces effets, ce qui signifie une augmentation de l'encombrement et du poids ce qui ne convient pas pour des unités offshore.

Afin d'éviter ce type de problèmes, des éléments de distribution peu sensibles aux défauts d'horizontalité ont été mis en œuvre. Ces distributeurs sont généralement constitués d'un collecteur et d'un distributeur reliés par une ou plusieurs conduites verticales relativement longues pour que le distributeur reste en charge quelles que soient les conditions de houle rencontrées. Ces distributeurs sont généralement peu sensibles aux effets de houle et génèrent une bonne qualité de distribution mais sont très encombrants : leur hauteur peut être de plusieurs mètres dans certains cas (US2004020238 A)

Une autre solution à ces problèmes est décrite dans les brevets FR 2771018 A et FR 2771019 A, elle consiste à utiliser deux distributeurs (primaire et secondaire). Chaque distributeur est divisé en plusieurs compartiments dans lesquels se répartit le liquide. Grâce à ces compartiments, le liquide est mieux réparti lors de l'inclinaison de la colonne. Toutefois, cette solution reste encombrante car elle nécessite deux distributeurs. En outre, les compartiments ne communiquant pas ensemble, la répartition du liquide dans les compartiments n'est pas équilibrée.

La demande de brevet FR 2771019 décrit un plateau distributeur de liquide pour une colonne de distillation comportant un distributeur primaire et un distributeur secondaire.

Les demandes de brevet US5752538, US1811247, US2944009 et FR0928201 décrivent différentes configurations de plateau distributeur.

L'invention concerne un plateau distributeur comportant des moyens de passage du gaz et des moyens de passage du liquide et comprenant en outre des moyens de cloisonnement perforés permettant une bonne qualité de distribution et une bonne dispersion du liquide, même pour des inclinaisons importantes du plateau imposées par le milieu marin.

### Le dispositif selon l'invention

L'invention concerne un plateau distributeur pour colonne d'échange de chaleur et/ou de matière entre un gaz (G) et un liquide (L), comportant au moins une cloison délimitant des compartiments sur l'une des surfaces du plateau. La cloison est perforée (7) pour permettre l'écoulement d'une partie du liquide entre les compartiments (8), chaque compartiment comprenant au moins un moyen (5) pour le passage dudit liquide à travers ledit plateau (2) et au moins un moyen (4) pour le passage dudit gaz à travers ledit plateau.

Selon l'invention, lesdits moyens pour le passage dudit gaz sont des cheminées en saillie d'une hauteur H sur l'une des surfaces dudit plateau.

Avantageusement, la cloison a une hauteur sensiblement égale à la hauteur H desdites cheminées.

De préférence, lesdites perforations sont disposées à la base desdites cloisons.

De manière avantageuse, lesdites cheminées sont cylindriques.

Selon l'invention le plateau comporte plusieurs cloisons sécantes et lesdites cloisons sont composées de deux séries de cloisons, les cloisons de chaque série étant parallèles entre elles et sécantes aux cloisons de l'autre série.

Selon l'invention, lesdites perforations de deux cloisons parallèles délimitant un même compartiment ne sont pas alignées.

Avantageusement, chaque portion de cloison délimitant un compartiment comporte une unique perforation.

Selon l'invention, une distance L1 entre deux cloisons parallèles consécutives vérifie la relation suivante : $L 1 \leq \frac{50}{2 tan θ} \left(mm\right)$ avec *θ* un angle d'inclinaison maximale dudit plateau par rapport à l'horizontale. De plus, une longueur L2 d'une diagonale d'un compartiment vérifie la relation suivante : $L 2 \leq \frac{50}{2 tan θ} \left(mm\right)$ avec *θ* un angle d'inclinaison maximale dudit plateau par rapport à l'horizontale. En outre, les longueurs L1 et L2 sont comprises entre 20 et 2000 mm.

En variante, les moyens de passage du liquide sont des cheminées équipées d'au moins une perforation, lesdites cheminées étant en saillie sur l'une des surfaces dudit plateau.

En outre, l'invention concerne une colonne d'absorption ou de régénération d'un fluide offshore, dans laquelle deux fluides sont mis en contact au moyen d'un contacteur gaz/liquide, ladite colonne comprenant au moins une première entrée d'un fluide liquide, au moins une deuxième entrée d'un fluide gazeux, au moins une première sortie d'un fluide gazeux et au moins une deuxième sortie d'un fluide liquide. Ladite colonne comporte un plateau distributeur selon l'invention pour permettre la distribution des fluides sur ledit contacteur.

L'invention concerne également une unité de traitement de gaz et/ou de captage du CO₂ par lavage du gaz au moyen d'une solution absorbante, notamment contenant des amines, ladite unité comporte au moins une colonne telle que décrite ci-dessus, pour permettre les échanges entre le gaz et la solution absorbante.

L'invention concerne aussi une unité de distillation et/ou de déshydratation d'un gaz, ladite unité comporte au moins une colonne telle que décrite précédemment, pour permettre les échanges entre le gaz et un liquide.

L'invention concerne en outre une barge flottante offshore, notamment pour la récupération d'hydrocarbures, caractérisée en ce qu'elle comprend une unité de traitement de gaz et/ou de captage de CO₂ telle que définie précédemment ou une unité de distillation et/ou de déshydratation telle que définie précédemment, pour nettoyer des gaz produits.

L'invention concerne aussi un procédé de fabrication d'un plateau selon l'invention, dans lequel on réalise les étapes suivantes :
a) on définit un indice IQ de déséquilibre dudit plateau (2) : $IQ \left(%\right) = \frac{{U}_{L 1} - {U}_{L 2}}{\left({U}_{L 1}+{U}_{L 2}\right) / 2} 100$ avec *U*_{*L*1}*, U*_{*L*2} les vitesses du liquide sortant du plateau à deux extrémités diamétralement opposées du plateau.
b) on choisit un indice de déséquilibre maximal dudit plateau (2) et un angle d'inclinaison *θ* maximale du plateau (2) par rapport à l'horizontale ;
c) on détermine une distance L1 entre deux cloisons parallèles consécutives et une longueur L2 d'une diagonale d'un compartiment permettant d'obtenir l'indice de déséquilibre maximal ; et
d) on positionne lesdites cloisons en respectant les longueurs L1 et L2.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une colonne de traitement de gaz ou de capture de CO₂ équipée d'un plateau distributeur en tête de colonne La figure 2, déjà décrite, illustre un plateau distributeur selon l'art antérieur.
La figure 3, déjà décrite, illustre un plateau distributeur incliné selon l'art antérieur.
La figure 4, illustre un plateau distributeur selon l'invention.
La figure 5, illustre les cloisons du plateau distributeur selon l'invention.
Les figures 6a) à 6c) illustrent l'évolution de la garde de liquide pour trois positions angulaires (0, 5° et - 5°) du plateau selon l'art antérieur.
Les figures 7a) à 7c) illustrent l'évolution de la garde de liquide pour trois positions angulaires (0, 5° et - 5°) du plateau selon l'invention.
La figure 8 est une courbe comparative entre l'invention et l'art antérieur.
La figure 9 illustre le plateau distributeur incliné selon l'invention.

### Description détaillée de l'invention

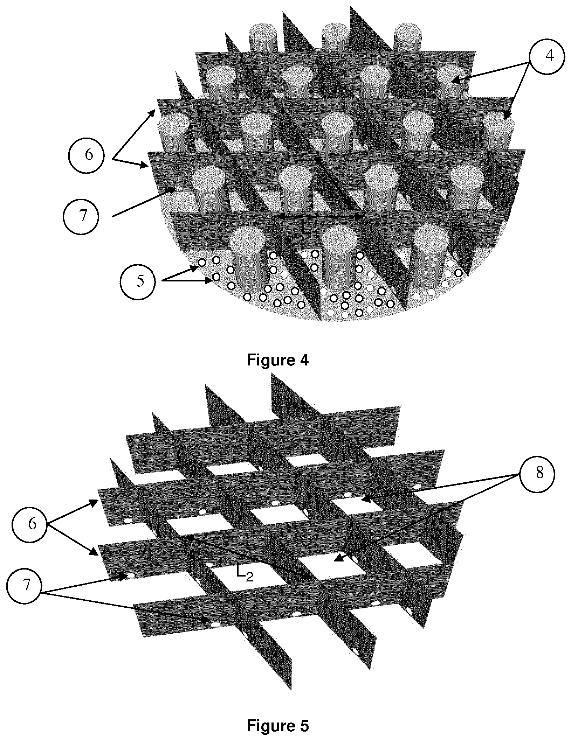

La figure 4 illustre un plateau distributeur selon l'invention.

L'invention concerne un plateau distributeur pour colonne (1) d'échange de chaleur et/ou de matière entre un gaz (G) et un liquide (L), comprenant classiquement au moins un moyen pour le passage de gaz (tel qu'une cheminée) (4) à travers le plateau, et au moins un moyen pour le passage du liquide (tel qu'un orifice) (5) à travers le plateau (2).

En outre, le plateau distributeur comprend au moins une cloison (6) permettant de compartimenter une surface du plateau, la cloison (6) étant perforée (7) pour permettre l'écoulement d'une partie du liquide entre les compartiments (8) formés par la cloison (6). Selon l'invention, chaque compartiment (8) comporte au moins un moyen pour le passage du gaz (4) et au moins un, de préférence plusieurs, moyen pour le passage du liquide (5).

Selon l'invention, le plateau distributeur comprend plusieurs cloisons (6).

Les cloisons génèrent des compartiments (8) de liquide, qui servent de "barrière" lorsque le plateau est incliné. Ainsi, on maintient une garde de liquide relativement homogène même avec une inclinaison importante. Une bonne qualité de distribution du liquide sur le contacteur gaz/liquide est de ce fait garantie. On appelle garde de liquide, l'interface entre le gaz et le liquide. La hauteur de la garde de liquide correspond au niveau du liquide par rapport à la surface supérieure du plateau. En outre, on appelle zone d'écoulement du liquide la zone sur laquelle circule le liquide ; il s'agit du côté supérieur du plateau, sur lequel les cheminées (4) sont en saillie. De plus, grâce aux perforations (7) des cloisons (6) le liquide peut s'écouler sur la totalité de la surface du plateau distributeur (2), assurant ainsi une bonne dispersion radiale du liquide. De préférence, chaque compartiment (8) comporte une unique cheminée (4) et plusieurs orifices (5).

Selon un mode de réalisation de l'invention, les cheminées (4) sont cylindriques, ce qui facilite leur mise en place et leur fabrication. De plus, le pas des cheminées sur le plateau peut être un pas triangulaire ou carré.

Les orifices (5) qui équipent le plateau (2) peuvent avoir un pas triangulaire ou carré. Avantageusement, le plateau (2) comporte un nombre d'orifices (5) supérieur au nombre de cheminées (4). De plus, les orifices (5) peuvent être de même taille ou de tailles différentes.

La figure 5 illustre un mode de réalisation particulier des cloisons (6) du plateau distributeur selon l'invention.

Selon ce mode de réalisation, les cloisons sont réparties en deux séries (ou ensembles) de cloisons. Dans chaque série, les cloisons sont parallèles entre elles, écartées régulièrement (d'une longueur L1), et sécantes aux cloisons de l'autre série. Ainsi, les compartiments ont sensiblement une forme de losange (dont la longueur de la diagonale est notée L2). Avantageusement, selon ce mode de réalisation, les cloisons (6) ont une hauteur sensiblement égale à la hauteur H des cheminées (4). Cette hauteur est suffisante pour assurer une bonne qualité de dispersion et en outre l'encombrement du plateau distributeur selon l'invention reste identique à l'encombrement d'un plateau distributeur "classique". Chaque compartiment (8) comporte une seule cheminée (5). Selon ce mode de réalisation, on peut choisir un écartement L1 sensiblement égal à la distance séparant deux cheminées voisines.

Il est également possible de déterminer la longueur L1 ou la longueur L2, en fonction de caractéristiques du plateau souhaitées : un indice de déséquilibre IQ (exprimé en pourcentage), et un angle d'inclinaison maximale *θ* imposé par les conditions marines. Pour quantifier la sensibilité au milieu marin du plateau, on définit l'indice de déséquilibre IQ liquide comme : $IQ \left(%\right) = \frac{{U}_{L 1} - {U}_{L 2}}{\left({U}_{L 1}+{U}_{L 2}\right) / 2} 100$ (équation 1)

Avec : U_{L1,2} : La vitesse du liquide sortant des orifices situés aux extrémités du plateau distributeur comme présenté sur les figures 3 (art antérieur) et 9 (selon l'invention). Une faible valeur d'indice de déséquilibre liquide indique une faible sensibilité de la distribution aux effets de la houle. A l'inverse, une valeur élevée de cet indice IQ indique un fort déséquilibre de distribution.

Les distances caractéristiques L1, L2 du plateau doivent être optimisées de manière à minimiser l'indice de déséquilibre. En fonction des caractéristiques du plateau et des conditions de fonctionnement (angle maximum d'inclinaison *θ* imposé par le milieu marin), il est possible de définir une longueur optimale de L1 et L2 avec la combinaison des formulations suivantes : $\left\{\begin{matrix}{h}_{max} = ho + {L}_{1 , 2} tan θ \\ {h}_{min} = ho - {L}_{1 , 2} tan θ \\ Δ h = {h}_{max} - {h}_{min} = 2 {L}_{1 , 2} tan θ \\ {U}_{L 1} ∝ {c}_{f} \sqrt{2 {gh}_{max}} \\ {U}_{L 2} ∝ {c}_{f} \sqrt{2 {gh}_{min}}\end{matrix}\right.$ avec :
*c_{f} :* le coefficient de frottement à l'orifice,
*h*₀ : hauteur à l'équilibre ( *θ* = 0° ) de la garde de liquide dans un compartiment du distributeur,
hₘₐₓ : la hauteur maximale de garde liquide dans un compartiment du distributeur,
hₘᵢₙ : la hauteur minimale de la garde liquide dans un compartiment du distributeur,
U_{L1}, U_{L2} : vitesse du liquide à l'orifice, et
le signe ∝ signifie proportionnel à.

Il est donc possible de déterminer les longueurs L1, L2 en fonction de la géométrie du plateau et des conditions marines pour respecter un indice de déséquilibre donné. Par exemple pour avoir un indice de déséquilibre IQ < 10%, il faut que Δ*h* ≤ 50*mm* de ce fait les longueurs L1, L2 doivent vérifier la relation suivante : ${L}_{1 , 2} \leq \frac{50}{2 tan θ} \left(mm\right)$.

Selon un mode de réalisation de l'invention, chaque cloison (6) contient une unique perforation (7). Cette perforation permet l'écoulement du fluide entre les compartiments, ce qui assure une bonne répartition radiale du liquide sur la totalité du plateau distributeur. Les perforations (7) peuvent être circulaires, oblongues, rectangulaires... Toutefois, la surface des perforations (7) peut, de préférence, rester faible par rapport à la surface des cloisons pour que les cloisons (6) continuent de jouer leur rôle principal : limiter la quantité de fluide s'écoulant sur le plateau, afin de garantir une bonne homogénéité de la hauteur du liquide sur le plateau. De plus, selon ce mode de réalisation, pour empêcher un écoulement linéaire du fluide et pour assurer une bonne dispersion radiale du liquide, les perforations (7) de deux parois parallèles d'un compartiment (8) ne sont pas alignées (ou coaxiales), c'est-à-dire qu'une droite qui passe par les centres de perforations de deux cloisons parallèles, n'est pas parallèle à une des cloisons du compartiment (8). Avantageusement, les perforations (7) sont placées dans la partie inférieure des cloisons (6), c'est à dire à proximité du plateau distributeur, pour faciliter l'écoulement du liquide ; les perforations (7) restent toujours situées sous la hauteur de la garde de liquide.

Le nombre de compartiments (et par conséquent le nombre de cloisons) peut être dépendant du diamètre du plateau. De préférence, un plateau de grande dimension est plus compartimenté qu'un plateau de plus petite dimension.

En variante du mode de réalisation préférentiel de l'invention, on peut modifier les caractéristiques suivantes :
- les moyens de cloisonnement peuvent former des compartiments comportant respectivement plusieurs cheminées,
- les compartiments ont une forme triangulaire, pour ce mode de réalisation, on peut disposer trois séries de cloisons, les cloisons d'une même série étant parallèles entre elles, et sécantes aux cloisons des autres séries,
- les compartiments ont une forme hexagonale (par exemple du type alvéole de ruche),
- les perforations de deux côtés en face à face d'un compartiment sont alignées,
- chaque cloison comporte plusieurs perforations,
- les moyens de passage du liquide (5) sont des cheminées équipées d'au moins une perforation (ou au moins une rangée de perforations), les cheminées étant en saillie sur l'une des surfaces dudit plateau (2).

L'invention concerne également une colonne offshore (1) d'absorption ou de régénération d'un fluide, dans laquelle deux fluides sont mis en contact au moyen d'un contacteur gaz/liquide (3), ladite colonne (1) comprenant au moins une première entrée d'un fluide liquide, au moins une deuxième entrée d'un fluide gazeux, au moins une première sortie d'un fluide gazeux et au moins une deuxième sortie d'un fluide liquide. La colonne (1) comporte en outre un plateau distributeur (2) tel que décrit ci-dessus, pour permettre la distribution des fluides sur ledit contacteur (3).

De manière avantageuse, le contacteur gaz/liquide (3) est un lit de garnissage structuré ou vrac. Le plateau distributeur (2) peut être associé avec un système de dispersion disposé sous le plateau distributeur, ce système de dispersion peut être un ensemble d'arroseurs ou de conduites perforées disposées en parallèle sous le plateau distributeur. Ce système de dispersion assure une bonne dispersion du liquide dans le contacteur gaz/liquide.

Le plateau selon l'invention est également adapté aux colonnes de distillation et aux colonnes de déshydratation.

En outre, l'invention concerne une unité de traitement de gaz et/ou de captage du CO₂ par lavage du gaz au moyen d'une solution absorbante, contenant par exemple des amines. L'unité comporte au moins une colonne (1) telle que définie ci-dessus, pour permettre les échanges entre le gaz et la solution absorbante, et principalement entre le gaz et les amines pouvant être contenues dans cette solution.

Enfin, l'invention concerne une barge flottante offshore du type FPSO ou FLNG, notamment pour la production et le traitement d'hydrocarbures. La barge comprend une unité de traitement de gaz et/ou de captage de CO₂ telle que décrite ci-dessus, pour nettoyer des gaz produits.

Le plateau selon l'invention est également adapté aux colonnes de distillation et aux colonnes de déshydratation.

Selon un mode de réalisation, les dimensions du plateau et de ses composants vérifient les intervalles suivants :
- le pas P des cheminées (4) est compris entre 100 et 300 mm,
- le plateau de distribution (2) a une hauteur comprise entre 100 et 2000 mm, de préférence entre 600 et 1000 mm,
- le diamètre du plateau (2) est compris entre 400 et 5000 mm,
- le diamètre des cheminées (4) est compris entre 50 et 500 mm,
- la hauteur H des cheminées (4) est comprise entre 300 et 1000 mm, de préférence entre 400 et 700 mm,
- la distance au bord minimum des cheminées (4) est comprise entre 50 et 200 mm, et vaut de préférence 100 mm,
- la hauteur des cloisons (6) est comprise entre 100 et 2000 mm, de préférence entre 700 et 1000 mm,
- le diamètre des perforations (7) est compris entre 5 et 100 mm, de préférence entre 30 et 50 mm, et
- les distances L1 et L2 sont comprises entre 20 et 2000 mm, préférentiellement vérifient la relation suivante : $Li \leq \frac{50}{2 tan θ} \left(mm\right)$ avec i = 1 ou 2.

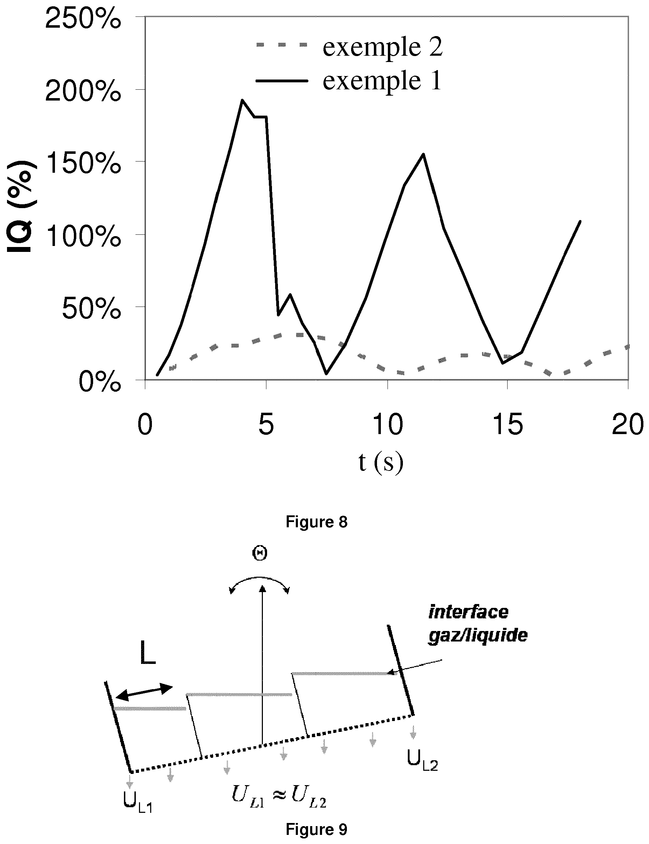

L'invention concerne en outre un procédé de fabrication d'un plateau distributeur tel que décrit précédemment, pour lequel on réalise les étapes suivantes :
- on choisit au préalable une configuration (nombre et position) de cloisons (6) sur ledit plateau (2), par exemple on choisit un ensemble de parois sécantes selon le mode de réalisation illustré à la figure 4 ;
- on définit un indice IQ de déséquilibre dudit plateau (2) : $IQ \left(%\right) = \frac{{U}_{L 1} - {U}_{L 2}}{\left({U}_{L 1}+{U}_{L 2}\right) / 2} 100$ avec *U*_{*L*1}, *U*_{*L*2} les vitesses du liquide sortant du plateau à deux extrémités diamétralement opposées du plateau (figure 9) ;
- on choisit un indice de déséquilibre maximal dudit plateau (2) et un angle d'inclinaison *θ* maximale du plateau (2) par rapport à l'horizontale, on se fixe ces valeurs en fonction des limites de fonctionnement (par exemple liées à la houle) d'utilisation de la colonne ;
- on détermine une distance L1 entre deux cloisons parallèles consécutives et une longueur L2 d'une diagonale d'un compartiment permettant d'obtenir l'indice de déséquilibre maximal ; et
- on positionne lesdites cloisons en respectant les longueurs L1 et L2.

### Exemple comparatif

Pour illustrer les avantages de notre invention, on se propose de comparer les résultats obtenus par l'invention à ceux obtenus par un plateau distributeur classique. Dans ce cadre, on utilise une approche numérique de type CFD (de l'anglais Computational Fluid Dynamics pouvant être traduit par mécanique des fluides numériques) qui consiste à étudier les mouvements d'un fluide, ou leurs effets, par la résolution numérique des équations régissant le fluide.

L'approche numérique utilisée est de type suivi d'interface (VOF pour Volume of Fluid : volume de fluide) décrite dans Hirt & Nichols, JCP 39, 201-225 (1981). Cette méthode, bien connue par l'homme du métier, est bien adaptée pour simuler le changement de topologie d'interface rencontré dans le distributeur soumis au mouvement de la houle (détachement, recollement d'interface, formation de déférente ...). L'évolution de l'écoulement diphasique est décrite par les équations de conservation de la masse, de conservation de quantité de mouvement, et par l'équation de transport du taux de présence.

Les calculs ont été réalisés avec le logiciel commercial Fluent 13 ^{®} (ANSYS, Etats-Unis).

Pour l'ensemble des calculs CFD d'évaluation présentés ci-après, l'angle associé au mouvement de roulis simulé est de +/- 5° avec une période de 15 s. Les propriétés des fluides sont : *ρ_{L}* = 1055 kg/m3, *µ_{L}* = 2,5 cp, *ρ_{G} =* 55 kg/m3, *µ_{G}* = 0,013 cp. La hauteur de garde de liquide sur le distributeur considérée est de 400 mm. Une distance au point de giration de la plateforme offshore de 50 m est prise en compte dans les calculs. Cette distance correspond aux distributeurs situés en tête de colonne, exposés aux plus fortes accélérations. Enfin, les effets capillaires sont supposés négligeables.

On rappelle que l'efficacité de distribution du système proposé est comparée à celle d'un plateau distributeur classique (figure 2) dans le cas où le plateau est soumis aux mouvements de la houle. La sensibilité au milieu marin du plateau est quantifiée par l'indice de déséquilibre défini par l'équation (1).

### Exemple 1 : Propriétés du plateau "classique" (art antérieur de la figure 2)

- Diamètre du plateau distributeur : 4150 mm
- Diamètre des cheminées de gaz : 350 mm
- Hauteur des cheminées de gaz : 700 mm
- Pas triangulaire des cheminées de gaz P : 200 mm
- Distance au bord minimum des cheminées de gaz : 100 mm
- Nombre de cheminées : 19
- Porosité du plateau (surface cheminées/surface totale): 13,5

### Exemple 2 : Propriétés du plateau selon l'invention (figure 4) :

- Diamètre du plateau distributeur (2) : 4150 mm
- Diamètre des cheminées de gaz (4) : 350 mm
- Hauteur des cheminées de gaz (4) : 700 mm
- Pas triangulaire des cheminées de gaz (4) P : 200 mm
- Distance au bord minimum des cheminées (4) : 100 mm
- Nombre de cheminées (4) : 19
- Porosité du plateau (2) (surface cheminées/surface totale) : 13,5
- Hauteur des moyens de cloisonnement (6) : 700 mm
- Diamètre des perforations (7) sur les moyens de cloisonnement (6) : 50 mm
- Nombre de compartiments (8) : 23 (on note que 4 compartiments tronqués situés en périphérie du plateau ne contiennent pas de cheminées, cf. figure 4)
- Distance L1 : 920 mm
- Distance L2 : 1600 mm

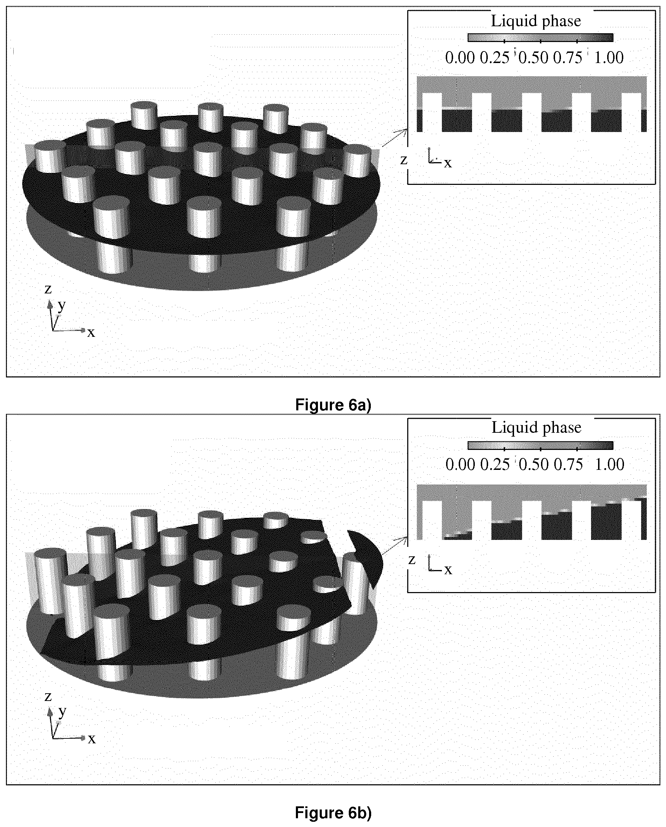

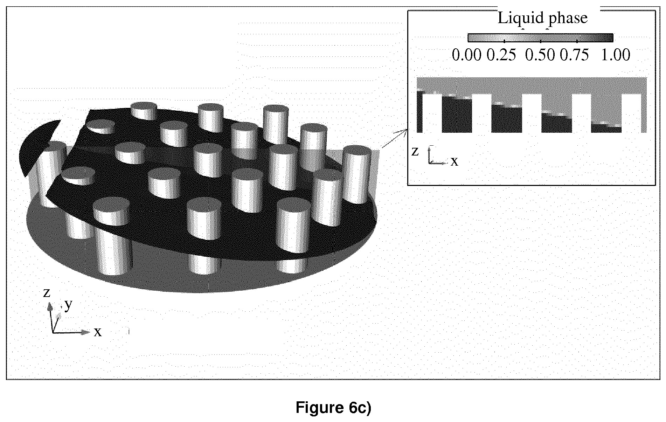

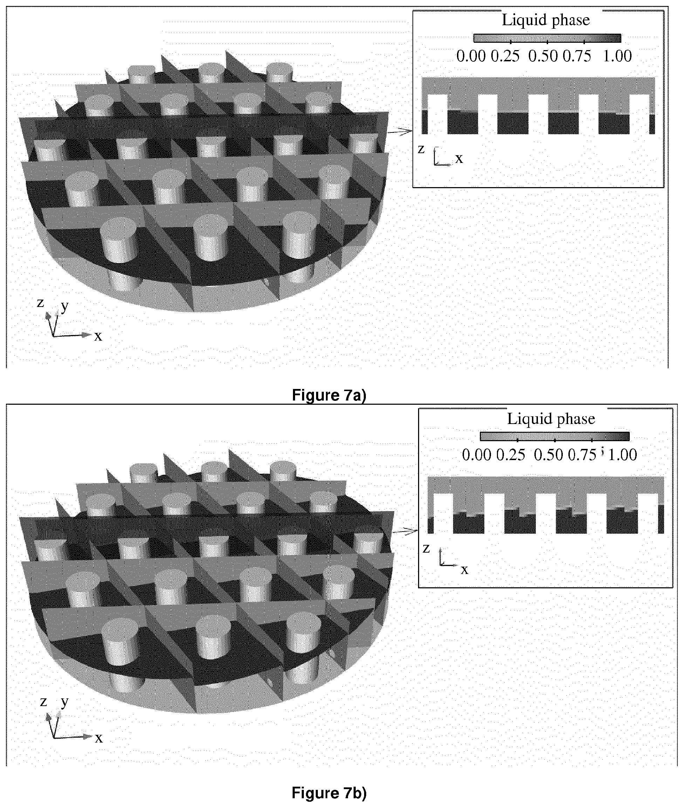

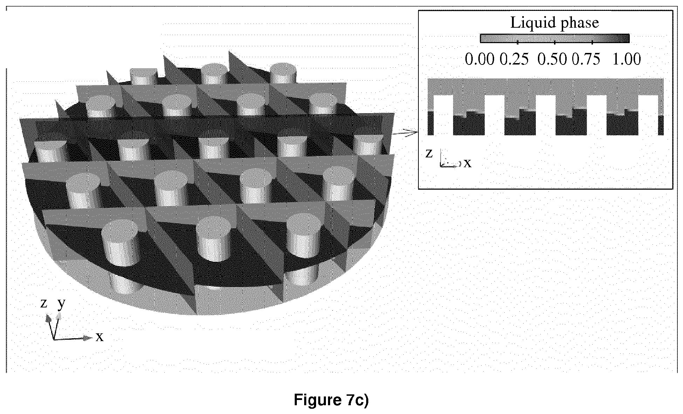

Les figures 6 et 7 présentent l'évolution de la garde liquide (interface gaz/liquide) sur le distributeur lorsque ce dernier est soumis aux mouvements marins, respectivement pour les exemples 1 et 2. Les résultats sont issus de calculs de type CFD dynamique. Les figures représentent différents instants correspondant à différentes positions extrêmes. Les figures 6a) et 7a) représentent les plateaux dans une position horizontale ( *θ* = 0° ), les figures 6b) et 7b) illustrent les plateaux dans une première position extrémale ( *θ* = 5° ) correspondant à un mouvement de houle, les figures 6c) et 7c) représentent les plateaux dans une deuxième position extrémale opposée à la première position extrémale ( *θ* = -5°). La partie droite des figures 6 et 7 illustre la variation de la hauteur de la garde de liquide dans un plan vertical passant par un diamètre du plateau.

Les résultats indiquent clairement que le distributeur classique est fortement sensible aux effets de houle.

Pour le dispositif proposé en revanche, les résultats montrent que la garde liquide reste bien homogène sur le plateau distributeur malgré le mouvement de la houle, assurant ainsi une bonne qualité de distribution.

Ces résultats sont quantifiés sur la figure 8 qui compare l'indice de déséquilibre obtenu avec les deux plateaux distributeurs. Pour le plateau classique (exemple 1), l'indice de déséquilibre varie entre 0 % et 200 % sur une période d'oscillation du plateau avec un pic à 200% lorsque l'angle d'inclinaison atteint son maximum à savoir 5°. Il est à noter que la valeur de 200% indique qu'une partie du plateau distributeur n'est plus en contact avec le liquide (cf. figures 6b) et 6c)). Sur une période de 15 s le taux de mal-distribution moyen du distributeur standard est de 80 %.

En revanche, le plateau distributeur selon l'invention (exemple 2) présente des performances significativement meilleures. En effet, le l'indice de déséquilibre varie entre 0 et 30 % ; il n'y a donc pas de moment où une partie du plateau est asséchée et le taux de mal-distribution moyen pour une période de 15 s est de 17 %. Pour arriver à des résultats équivalents au système proposé avec un plateau classique, il faudrait une garde de liquide d'environ 1400 mm de hauteur ce qui rendrait ce dernier bien plus encombrant et plus lourd (poids du liquide) avec des cheminées gaz plus haute pour éviter leurs engorgement et notablement plus coûteux que le système proposé. Cet exemple montre que l'invention permet un gain significatif en encombrement et en efficacité de distribution en milieu flottant.

## Revendications

1. **Plateau** distributeur pour colonne (1) d'échange de chaleur et/ou de matière entre un gaz (G) et un liquide (L), comportant au moins une cloison (6) délimitant des compartiments (8) sur l'une des surfaces du plateau, **caractérisé en ce que** ladite cloison est perforée (7) pour permettre l'écoulement d'une partie du liquide entre les compartiments (8), chaque compartiment comprenant au moins un moyen (5) pour le passage dudit liquide à travers ledit plateau (2) et au moins un moyen (4) pour le passage dudit gaz à travers ledit plateau, et **en ce que** ledit plateau comporte plusieurs cloisons (6) sécantes, lesdites cloisons (6) étant composées de deux séries de cloisons, les cloisons de chaque série étant parallèles entre elles et sécantes aux cloisons de l'autre série.

2. Plateau selon la revendication 1, dans lequel lesdits moyens (4) pour le passage dudit gaz sont des cheminées (4) en saillie d'une hauteur H sur l'une des surfaces dudit plateau (2).

3. Plateau selon la revendication 2, dans lequel la cloison (6) a une hauteur sensiblement égale à la hauteur H desdites cheminées (4).

4. Plateau selon l'une des revendications précédentes, dans lequel lesdites perforations (7) sont disposées à la base de ladite cloison (6).

5. Plateau selon l'une des revendications 2 à 4, dans lequel lesdites cheminées (4) sont cylindriques.

6. Plateau selon l'une des revendications précédentes, dans lequel lesdites perforations (7) de deux cloisons (6) parallèles délimitant un même compartiment (8) ne sont pas alignées.

7. Plateau selon l'une des revendications précédentes, dans lequel chaque cloison (6) comporte une unique perforation (7).

8. Plateau selon l'une des revendications précédentes, dans lequel une distance L1 entre deux cloisons parallèles consécutives vérifie la relation suivante : $L 1 \leq \frac{50}{2 tan θ} \left(mm\right)$ avec *θ* un angle d'inclinaison maximale dudit plateau par rapport à l'horizontale.

9. Plateau selon l'une des revendications précédentes, dans lequel une longueur L2 d'une diagonale d'un compartiment vérifie la relation suivante : $L 2 \leq \frac{50}{2 tan θ} \left(mm\right)$ avec *θ* un angle d'inclinaison maximale dudit plateau par rapport à l'horizontale.

10. Plateau selon l'une des revendications 8 et 9, dans lequel les longueurs L1 et L2 sont comprises entre 20 et 2000 mm.

11. Plateau distributeur offshore (1) selon l'une des revendications précédentes, dans lequel les moyens de passage du liquide (5) sont des cheminées équipées d'au moins une perforation, lesdites cheminées étant en saillie sur l'une des surfaces dudit plateau (2).

12. Colonne d'absorption ou de régénération d'un fluide offshore, dans laquelle deux fluides sont mis en contact au moyen d'un contacteur gaz/liquide (3), ladite colonne comprenant au moins une première entrée d'un fluide liquide, au moins une deuxième entrée d'un fluide gazeux, au moins une première sortie d'un fluide gazeux et au moins une deuxième sortie d'un fluide liquide, **caractérisée en ce que** ladite colonne (1) comporte un plateau distributeur (2) selon l'une des revendications précédentes pour permettre la distribution des fluides sur ledit contacteur (3).

13. Unité de traitement de gaz et/ou de captage du CO₂ par lavage du gaz au moyen d'une solution absorbante, notamment contenant des amines, **caractérisée en ce que** ladite unité comporte au moins une colonne (1) selon la revendication 12, pour permettre les échanges entre le gaz et la solution absorbante.

14. Unité de distillation et/ou de déshydratation d'un gaz, **caractérisée en ce que** ladite unité comporte au moins une colonne (1) selon la revendication 12, pour permettre les échanges entre le gaz et un liquide.

15. Barge flottante offshore, notamment pour la récupération d'hydrocarbures, **caractérisée en ce qu'**elle comprend une unité de traitement de gaz et/ou de captage de CO₂ selon la revendication 13 ou une unité de distillation et/ou de déshydratation selon la revendication 14, pour nettoyer des gaz produits.

16. Procédé de fabrication d'un plateau selon l'une des revendications 1 à 11, dans lequel on réalise les étapes suivantes :
a) on définit un indice IQ de déséquilibre dudit plateau (2) : $IQ \left(%\right) = \frac{{U}_{L 1} - {U}_{L 2}}{\left({U}_{L 1}+{U}_{L 2}\right) / 2} 100$ **avec** *U*_{*L*1} , *U*_{*L*2} les vitesses du liquide sortant du plateau à deux extrémités diamétralement opposées du plateau.
b) on choisit un indice de déséquilibre maximal dudit plateau (2) et un angle d'inclinaison *θ* maximale du plateau (2) par rapport à l'horizontale ;
c) on détermine une distance L1 entre deux cloisons parallèles consécutives et une longueur L2 d'une diagonale d'un compartiment permettant d'obtenir l'indice de déséquilibre maximal ; et
d) on positionne lesdites cloisons en respectant les longueurs L1 et L2.

## Patentansprüche

1. Verteilerboden für eine Säule (1) zum Wärme- und/oder Materialaustausch zwischen einem Gas (G) und einer Flüssigkeit (L), umfassend mindestens eine Trennwand (6), die Abteilungen (8) auf einer der Oberflächen des Bodens abgrenzt, **dadurch gekennzeichnet, dass** die Trennwand gelocht (7) ist, um das Fließen von einem Teil der Flüssigkeit zwischen den Abteilungen (8) zu ermöglichen, wobei jede Abteilung mindestens eine Einrichtung (5) für den Durchtritt der Flüssigkeit durch den Boden (2) und mindestens eine Einrichtung (4) für den Durchtritt des Gases durch den Boden umfasst, und dass der Boden mehrere sich schneidende Trennwände (6) aufweist, wobei die Trennwände (6) aus zwei Reihen von Trennwänden gebildet sind, wobei die Trennwände jeder Reihe zueinander parallel sind und sich mit den Trennwänden der anderen Reihen schneiden.

2. Boden nach Anspruch 1, wobei die Einrichtungen (4) für den Durchtritt des Gases Kamine (4) sind, die um eine Höhe H auf einer der Oberflächen des Bodens (2) hervorstehen.

3. Boden nach Anspruch 2, wobei die Trennwand (6) eine Höhe aufweist, die im Wesentlichen gleich der Höhe H der Kamine (4) ist.

4. Boden nach einem der vorhergehenden Ansprüche, wobei die Lochungen (7) an der Basis der Trennwand (6) angeordnet sind.

5. Boden nach einem der Ansprüche 2 bis 4, wobei die Kamine (4) zylindrisch sind.

6. Boden nach einem der vorhergehenden Ansprüche, wobei die Lochungen (7) von zwei parallelen Trennwänden (6), die eine gleiche Abteilung (8) begrenzen, nicht ausgerichtet sind.

7. Boden nach einem der vorhergehenden Ansprüche, wobei jede Trennwand (6) eine einzige Lochung (7) aufweist.

8. Boden nach einem der vorhergehenden Ansprüche, wobei ein Abstand L1 zwischen zwei aufeinanderfolgenden parallelen Trennwänden die folgende Beziehung erfüllt: $L 1 \leq \frac{50}{2 tan θ} \left(mm\right)$ wobei θ einen maximalen Neigungswinkel des Bodens in Bezug auf die Horizontale bedeutet.

9. Boden nach einem der vorhergehenden Ansprüche, wobei eine Länge L2 einer Diagonale einer Abteilung die folgende Beziehung erfüllt: $L 2 \leq \frac{50}{2 tan θ} \left(mm\right)$ wobei θ einen maximalen Neigungswinkel des Bodens in Bezug auf die Horizontale bedeutet.

10. Boden nach einem der Ansprüche 8 und 9, wobei die Längen L1 und L2 zwischen 20 und 2000 mm betragen.

11. Offshore-Verteilerboden (1) nach einem der vorhergehenden Ansprüche, bei dem die Einrichtungen für den Durchtritt der Flüssigkeit (5) mit mindestens einer Lochung ausgestattete Kamine sind, wobei die Kamine auf einer der Oberflächen des Bodens (2) hervorstehen.

12. Säule zum Absorbieren oder Regenerieren eines Offshore-Fluids, worin zwei Fluide mittels eines Gas/Flüssigkeit-Kontaktors (3) in Kontakt gebracht werden, wobei die Säule mindestens einen ersten Einlass für ein flüssiges Fluid, mindestens einen zweiten Einlass für ein gasförmiges Fluid, mindestens einen ersten Auslass für ein gasförmiges Fluid und mindestens einen zweiten Auslass für ein flüssiges Fluid umfasst, **dadurch gekennzeichnet, dass** die Säule (1) einen Verteilerboden (2) nach einem der vorhergehenden Ansprüche umfasst, um die Verteilung der Fluide auf den Kontaktor (3) zu ermöglichen.

13. Anlage zur Behandlung von Gas und/oder zur Abscheidung von CO₂ durch Waschen des Gases mittels einer absorbierenden Lösung, insbesondere enthaltend Amine, **dadurch gekennzeichnet, dass** die Anlage mindestens eine Säule (1) nach Anspruch 12 umfasst, um den Austausch zwischen dem Gas und der absorbierenden Lösung zu ermöglichen.

14. Anlage zur Destillation und/oder Entwässerung eines Gases, **dadurch gekennzeichnet, dass** die Anlage mindestens eine Säule (1) nach Anspruch 12 umfasst, um den Austausch zwischen dem Gas und einer Flüssigkeit zu ermöglichen.

15. Offshore-Schwimmkahn, insbesondere zur Gewinnung von Kohlenwasserstoffen, **dadurch gekennzeichnet, dass** er eine Anlage zur Gasbehandlung und/oder CO₂ -Abscheidung nach Anspruch 13 oder eine Destillations- und/oder Entwässerungsanlage nach Anspruch 14 zur Reinigung von Produktgasen umfasst.

16. Verfahren zum Herstellen eines Bodens nach einem der Ansprüche 1 bis 11, wobei die folgenden Schritte durchgeführt werden:
a) ein Ungleichgewichtsindex IQ des Bodens (2) wird definiert als: $IQ \left(%\right) = \frac{{U}_{L 1} - {U}_{L 2}}{\left({U}_{L 1}+{U}_{L 2}\right) / 2} 100$ wobei U_{L1}, U_{L2} die Geschwindigkeiten der den Boden verlassenden Flüssigkeit an zwei diametral gegenüberliegenden Enden des Bodens sind.
b) ein maximaler Ungleichgewichtsindex des Bodens (2) und ein maximaler Neigungswinkel θ des Bodens (2) in Bezug auf die Horizontale werden gewählt;
(c) ein Abstand L1 zwischen zwei aufeinanderfolgenden parallelen Trennwänden und eine Länge L2 einer Diagonale einer Abteilung werden so festgelegt, dass der maximale Ungleichgewichtsindex erzielt wird; und
d) die Trennwände werden entsprechend den Längen L1 und L2 positioniert.

## Claims

1. Distributor tray for a column (1) for exchanging heat and/or material between a gas (G) and a liquid (L), having at least one partition (6) delimiting compartments (8) on one of the surfaces of the tray, **characterized in that** said partition is perforated (7) to allow some of the liquid to flow between the compartments (8), each compartment comprising at least one means (5) for the passage of said liquid through said tray (2) and at least one means (4) for the passage of said gas through said tray, and **in that** said tray has a plurality of secant partitions (6), said partitions (6) being composed of two series of partitions, the partitions of each series being parallel to each other and secant to the partitions of the other series.

2. Tray according to Claim 1, wherein said means (4) for the passage of said gas are chimneys (4) projecting by a height H from one of the surfaces of said tray (2).

3. Tray according to Claim 2, wherein the partition (6) has a height substantially equal to the height H of said chimneys (4).

4. Tray according to one of the preceding claims, wherein said perforations (7) are disposed at the base of said partition (6).

5. Tray according to one of Claims 2 to 4, wherein said chimneys (4) are cylindrical.

6. Tray according to one of the preceding claims, wherein said perforations (7) of two parallel partitions (6) delimiting one and the same compartment (8) are not aligned.

7. Tray according to one of the preceding claims, wherein each partition (6) has a single perforation (7).

8. Tray according to one of the preceding claims, wherein a distance L1 between two consecutive parallel partitions satisfies the following relationship: $L 1 \leq \frac{50}{2 tan θ} \left(mm\right)$ with θ an angle of maximum inclination of said tray with respect to the horizontal.

9. Tray according to one of the preceding claims, wherein a length L2 of a diagonal of a compartment satisfies the following relationship: $L 2 \leq \frac{50}{2 tan θ} \left(mm\right)$ with θ an angle of maximum inclination of said tray with respect to the horizontal.

10. Tray according to either of Claims 8 and 9, wherein the lengths L1 and L2 are between 20 and 2000 mm.

11. Offshore distributor tray (1) according to one of the preceding claims, wherein the means for passage of the liquid (5) are chimneys equipped with at least one perforation, said chimneys projecting from one of the surfaces of said tray (2).

12. Offshore column for absorption or regeneration of a fluid, wherein two fluids are brought into contact by means of a gas/liquid contactor (3), said column comprising at least one first inlet for a liquid fluid, at least one second inlet for a gaseous fluid, at least one first outlet for a gaseous fluid and at least one second outlet for a liquid fluid, **characterized in that** said column (1) has a distributor tray (2) according to one of the preceding claims to allow the distribution of the fluids on said contactor (3).

13. Unit for gas processing and/or CO₂ capture by scrubbing of the gas using an absorbent solution, in particular containing amines, **characterized in that** said unit has at least one column (1) according to Claim 12, to allow the exchanges between the gas and the absorbent solution.

14. Unit for distillation and/or dehydration of a gas, **characterized in that** said unit has at least one column (1) according to Claim 12, to allow the exchanges between the gas and a liquid.

15. Offshore floating barge, in particular for the recovery of hydrocarbons, **characterized in that** it comprises a gas processing and/or CO₂ capture unit according to Claim 13 or a distillation and/or dehydration unit according to Claim 14, to clean the produced gases.

16. Method for manufacturing a tray according to one of Claims 1 to 11, wherein the following steps are carried out:
a) defining an index IQ of imbalance of said tray (2): $IQ \left(%\right) = \frac{{U}_{L 1} - {U}_{L 2}}{\left({U}_{L 1}+{U}_{L 2}\right) / 2} 100$ with U_{L1}, U_{L2} the velocities of the liquid leaving the tray at two diametrically opposite ends of the tray;
b) choosing a maximum index of imbalance of said tray (2) and an angle of maximum inclination θ of the tray (2) with respect to the horizontal;
c) determining a distance L1 between two consecutive parallel partitions and a length L2 of a diagonal of a compartment, making it possible to obtain the maximum index of imbalance; and
d) positioning said partitions in accordance with the lengths L1 and L2.
